# EUROPEAN PATENT APPLICATION

(11) **EP 2 618 262 A1**
(43) Date of publication of application: **24.07.2013**
(21) Application number: 10857239.7
(22) Date of filing: 13.09.2010
(51) Int. Cl.: G06F 12/08

(54) **INFORMATION PROCESSING DEVICE AND METHOD FOR CONTROLLING INFORMATION PROCESSING DEVICE**

(71) Applicant: Fujitsu Limited, Kawasaki-shi, Kanagawa 211-8588 (JP)
(72) Inventor: AKIU, Susumu, Kawasaki-shi Kanagawa 211-8588 (JP); HATAIDA, Makoto, Kawasaki-shi Kanagawa 211-8588 (JP); ITOU, Daisuke, Kawasaki-shi Kanagawa 211-8588 (JP); HOSOKAWA, Yuka, Kawasaki-shi Kanagawa 211-8588 (JP)
(74) Representative: HOFFMANN EITLE
(86) International application number: PCT/JP2010/065763
(87) International publication number: WO 2012/035605

(57) **Abstract**

A configuration is provided having a directory. Information is registered with the directory in a first format having entries corresponding to data storage areas, respectively. The information indicates a CPU that stores data stored in a data storage area of one information processing part of plural information processing parts or an information processing part having the CPU. The configuration converts into a second format. The second format is such that an entry registered in such a way that data is not to be used from among the plural entries of the first format is removed and the number of the entries is reduced.

## Description

### TECHNICAL FIELD

The present invention relates to an information processing apparatus and a control method of an information processing apparatus.

### BACKGROUND ART

A memory control apparatus is known having the following configuration. The number of a cache memory that stores a copy of data is stored in each node field of main directory information (first storing method). In a case where the node field becomes insufficient, the number of cache memories that store the copies is stored in one of the node fields (second storing method). Then, whether either storing method is used is determined using a counting bit field as a flag.

Further, a multi-processor system is known having the following configuration. In a sharing-memory-type multi-processor in which information of a processing element that stores a copy of memory data is stored in a directory memory accompanying a data memory, plural processing elements are grouped, and the directory information is stored for each of the groups.

Further, a multi-processor system is known in which in a case where a directory does not have status information of a line of a memory, broadcast of a snoop is carried out for all of the processors outside a cell.

### PRIOR ART REFERENCE

### PATENT REFERENCE

PATENT REFERENCE 1: Japanese Laid-Open Patent Application No. 6-44136
PATENT REFERENCE 2: Japanese Laid-Open Patent Application No. 6-259384
PATENT REFERENCE 3: Japanese Laid-Open Patent Application No. 2009-70013

### SUMMARY OF INVENTION

### PROBLEM TO BE SOLVED BY INVENTION

A problem solution is to provide a configuration making it possible to effectively use a directory with which, for each one of data storage areas, information is registered indicating a CPU that has data stored at the data storage area of one information processing part of plural information processing parts or an information processing part that has the CPU.

### MEANS FOR SOLVING PROBLEM

A configuration is provided converting a first format for registering, for each one of data storage areas, information indicating a CPU having data stored at a data storage area or an information processing part that has the CPU into a second format in which the number of entries has been reduced. When the first format will be converted into the second format, the number of entries is reduced by removing an entry of plural entries of the first format, which entry is registered in such a way that data is not to be used.

### ADVANTAGEOUS EFFECTS OF INVENTION

By converting into the second format, information amounts stored in the respective entries increase, and it is possible to store more information indicating the CPUs that have the data stored at the data storage areas and the information processing parts that have the CPUs.

### BRIEF DESCRIPTION OF DRAWINGS

FIG. 1 is a block diagram depicting a configuration example of an information processing apparatus according to an embodiment 1 of the present invention.
FIG. 2A is a figure (#1) illustrating a flow of operations of a CPU's obtaining data in the configuration example depicted in FIG. 1.
FIG. 2B is a figure (#2) illustrating a flow of operations of a CPU's obtaining data in the configuration example depicted in FIG. 1.
FIG. 2C is a figure (#3) illustrating a flow of operations of a CPU's obtaining data in the configuration example depicted in FIG. 1.
FIG. 2D is a figure (#4) illustrating a flow of operations of a CPU's obtaining data in the configuration example depicted in FIG. 1.
FIG. 3 illustrates a configuration example of a directory applicable to the information processing apparatus according to the embodiment 1 of the present invention.
FIG. 4A illustrates a configuration example of a directory of a reference example.
FIG. 4B illustrates a configuration example of a directory (A-type) applicable to the information processing apparatus according to the embodiment 1 of the present invention.
FIG. 5 illustrates a configuration example of a directory (B-type) applicable to the information processing apparatus according to the embodiment 1 of the present invention.
FIG. 6 is a flowchart depicting a flow of operations (in a case where CPUs will share data) in a case where a reading request has been received from a CPU in a reference example.
FIG. 7A is a flowchart (#1) depicting a flow of operations (in a case #1 where CPUs will share data) in a case where a reading request has been received from a CPU in the information processing apparatus according to the embodiment 1 of the present invention.
FIG. 7B is a flowchart (#2) depicting a flow of operations (in a case #1 where CPUs will share data) in a case where a reading request has been received from a CPU in the information processing apparatus according to the embodiment 1 of the present invention.
FIG. 8A is a flowchart (#1) depicting a flow of operations (in a case #2 where CPUs will share data) in a case where a reading request has been received from a CPU in the information processing apparatus according to the embodiment 1 of the present invention.
FIG. 8B is a flowchart (#2) depicting a flow of operations (in a case #2 where CPUs will share data) in a case where a reading request has been received from a CPU in the information processing apparatus according to the embodiment 1 of the present invention.
FIG. 9 is a flowchart depicting a flow of operations (in a case where CPUs will have data without sharing) in a case where a reading request has been received from a CPU in a reference example.
FIG. 10A is a flowchart (#1) depicting a flow of operations (in a case #2 where CPUs will have data without sharing) in a case where a reading request has been received from a CPU in the information processing apparatus according to the embodiment 1 of the present invention.
FIG. 10B is a flowchart (#2) depicting a flow of operations (in a case #2 where CPUs will have data without sharing) in a case where a reading request has been received from a CPU in the information processing apparatus according to the embodiment 1 of the present invention.
FIG. 11A illustrates one example of a procedure of converting of a directory format applicable to the information processing apparatus according to the embodiment 1 of the present invention (from A-type to B-type).
FIG. 11B illustrates one example of a procedure of converting of a directory format applicable to the information processing apparatus according to the embodiment 1 of the present invention (from B-type to A-type).
FIG. 12 is a block diagram of a node controller applicable to the information processing apparatus according to the embodiment 1 of the present invention.

### MODES FOR CARRYING OUT THE INVENTION

Below, the embodiments of the present invention will be described with figures.

### Embodiment 1

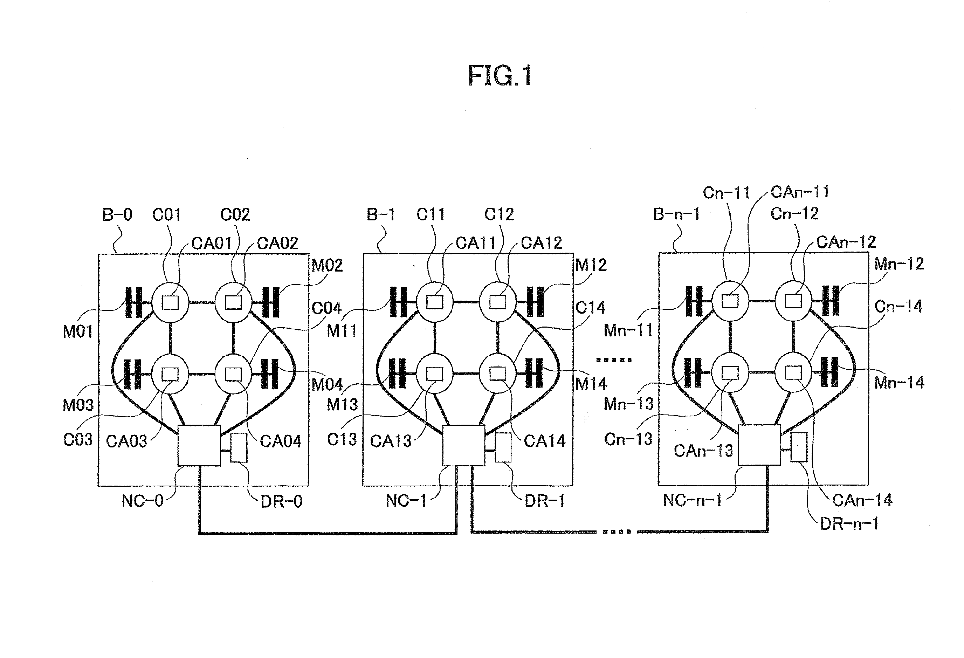

FIG. 1 depicts a block configuration example of the information processing apparatus according to the embodiment 1 of the present invention. It is noted that the information processing apparatus may also be referred to as a computer system. As depicted in FIG. 1, the information processing apparatus according to the embodiment 1 includes n boards B-0, B-1, ... and B-n-1 (there are some cases where they may be generally referred to as boards B). The respective ones of the n boards B-0, B-1, ... and B-n-1 are, for example, printed wiring boards, and may be referred to as information processing parts.

According to the embodiment 1, the n boards B-0, B-1, ... and B-n-1 have similar configurations, respectively. For example, the board B-0 has four CPUs C01, C02, C03 and C04, and four memories M01, M02, M03 and M04. Further, each CPU has a cache memory. That is, the CPUs C01, C02, C03 and C04 have the cache memories CA01, CA02, CA03 and CA04, respectively.

Similarly, the board B-1 has four CPUs C11, C12, C13 and C14, and four memories M11, M12, M13 and M14. Also here, each CPU has a cache memory. That is, the CPUs C11, C12, C13 and C14 have the cache memories CA11, CA12, CA13 and CA14, respectively.

Similarly, the board B-n-1 has four CPUs Cn-11, Cn-12, Cn-13 and Cn-14, and four memories Mn-11, Mn-12, Mn-13 and Mn-14. Also here, each CPU has a cache memory. That is, the CPUs Cn-11, Cn-12, Cn-13 and Cn-14 have the cache memories CAn-11, CAn-12, CAn-13 and CAn-14, respectively.

It is noted that the CPUs C01 to C04, C11 to C14, ... and Cn-11 to Cn-14 that the respective boards B-0, B-1, ... and B-n-1 have may be generally referred to as CPUs C. Similarly, the memories M01 to M04, M11 to M14, ... and Mn-11 to Mn-14 that the respective boards B-0, B-1, ... and B-n-1 have may be generally referred to as memories M. Similarly, the cache memories CA01 to CA04, CA11 to CA14, ... and CAn-11 to CAn-14 that the respective boards B-0, B-1, ... and B-n-1 have may be generally referred to as cache memories CA.

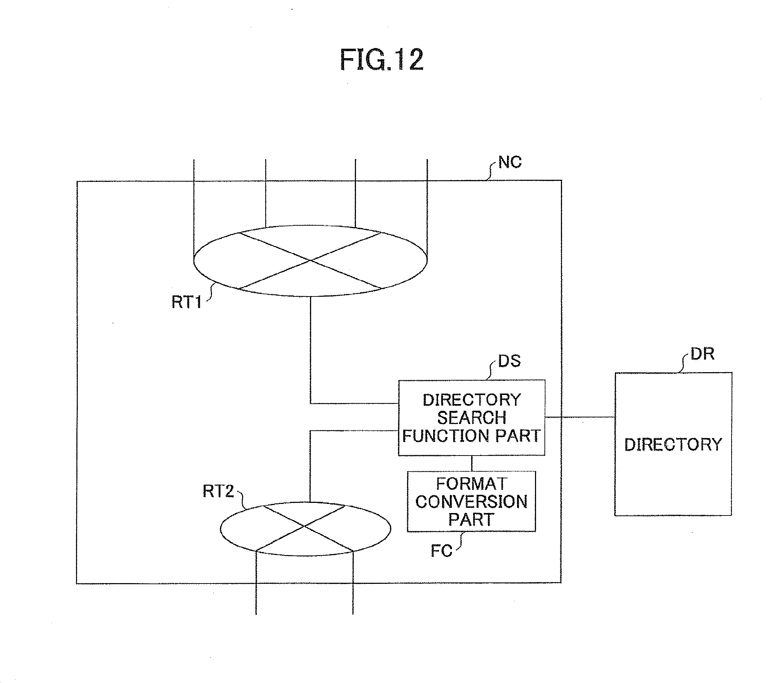

The boards B-0, B-1, ... and B-n-1 have node controllers NC-0, NC-1, ... and NC-n-1 (there are some cases where they may be generally referred to as node controllers NC). Configurations of the node controllers NC will be described later with FIG. 12. The node controller NC carries out transfer of data between the boards B. Also, the node controller NC uses a directory DR described later and recognizes the CPU that stores data stored by the memory space included in the board B this node controller NC belongs to, or the board having the CPU that stores the data.

The memory space included in the board B means the memory space including all of the respective memory spaces of the four memories M01, M02, M03 and M04 the board B-0 has in a case of the board B-0, for example. The node controller NC issues a snoop, if necessary, to the CPU or the board. Issuing a snoop (also being referred to as snooping) is an operation of ensuring coherency (cache coherency) between the cache memory CA and the memory M. Specifically, it means an operation of communicating by the node controller NC with the other cache memory CA with which it shares data, and, if necessary, giving an instruction to delete data of the cache memory, or the like.

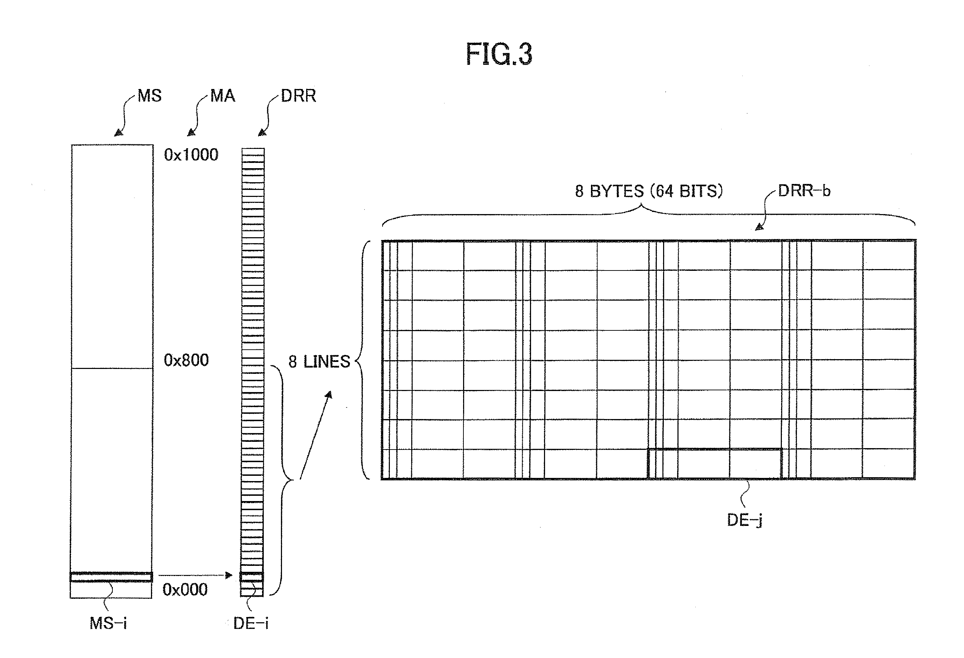

Further, the node controllers NC-0, NC-1, ... and NC-n-1 have the directories DR-0, DR-1, ... and DR-n-1 (there are some case where they are generally referred to as directories DR), respectively. A configuration of the directory DR will be described later with FIGs. 3 to 5. The node controller NC registers and manages, with the own directory DR, information for identifying the CPU C that stores data stored by the memory space included in the board B this node controller NC belongs to, or the other board B having the CPU C that stores the data. Further, the directory DR further stores information indicating whether data stored by any CPU C is shared by the other CPU C (Shared), the data is exclusively stored by the CPU C (Exclusive), or the data is invalid (Invalid). An actual device of the directory DR is a storage device (or a storage area), and the storage area of the storage device is managed by the node controller NC. It is noted that the data is "invalid (Invalid)" means that this data is "not used" (the use is inhibited).

Further, in the information processing apparatus of FIG. 1, each CPU included in each board B is connected with the memory M. As for the case of the board B-0, the CPU C01 is connected with the memory M01. Similarly, the CPU C02 is connected with the memory M02, the CPU C03 is connected with the memory M02, and the CPU C04 is connected with the memory M04. Further, the CPUs C01, C02, C03 and C04 mounted on the same board are connected in such a manner that they can communicate mutually. Further, the node controller NC-0 is connected with the CPU C01, C02, C03 and C04 in such a manner that it can communicate with them, respectively. Further, the node controllers NC-0, NC-1, ... and NC-n-1 the respective boards B-0, B-1, ... and B-n-1 have are connected together in such a manner that they can communicate together.

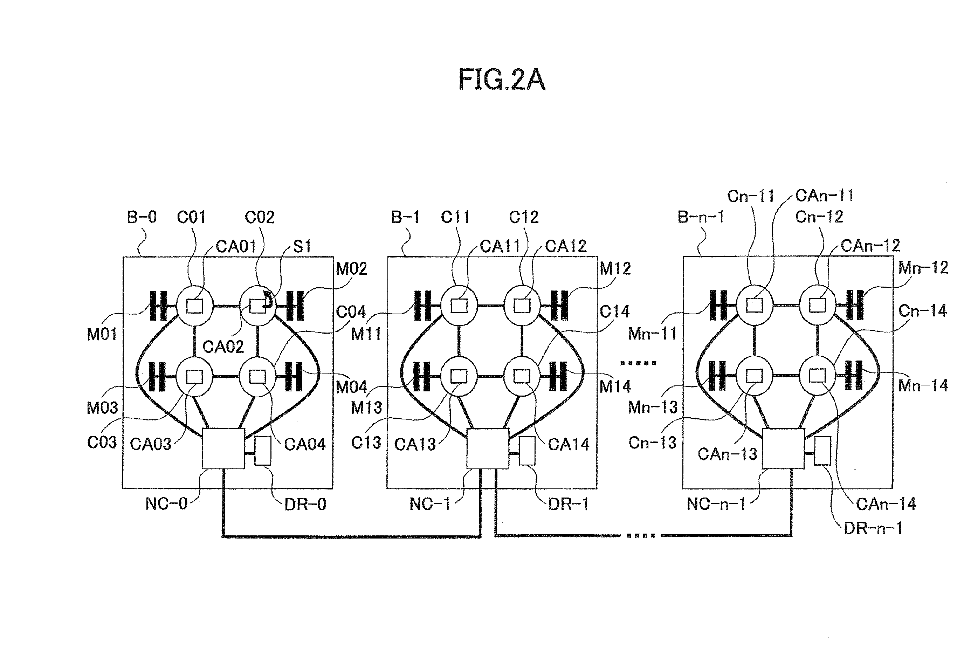

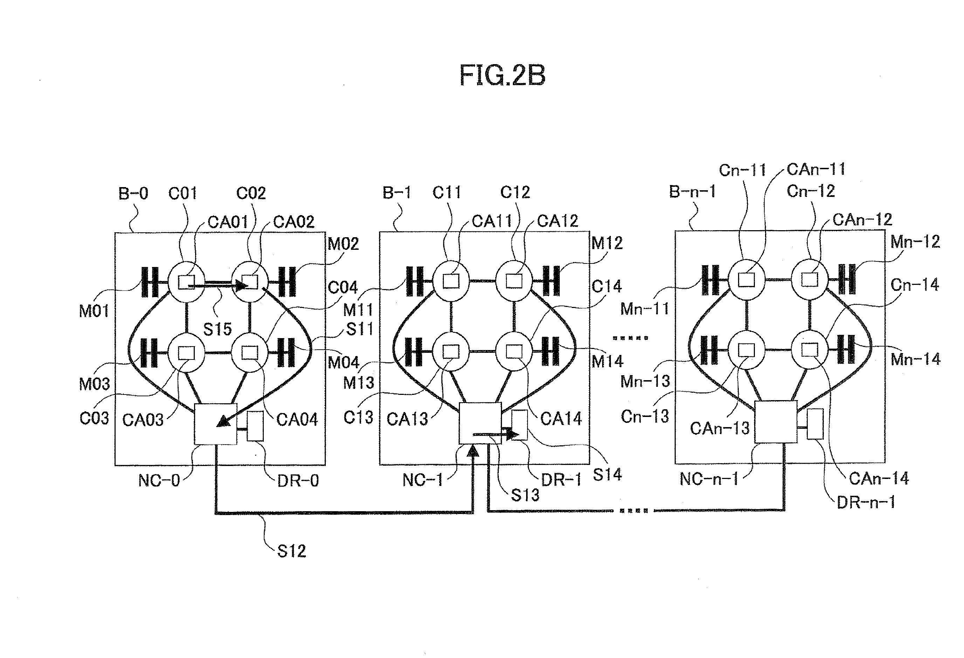

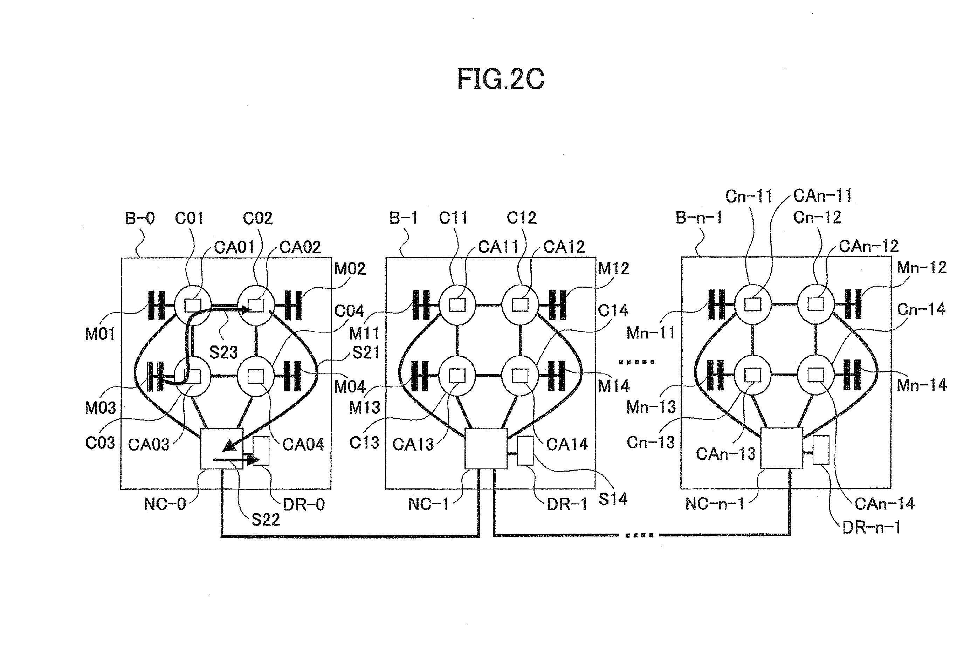

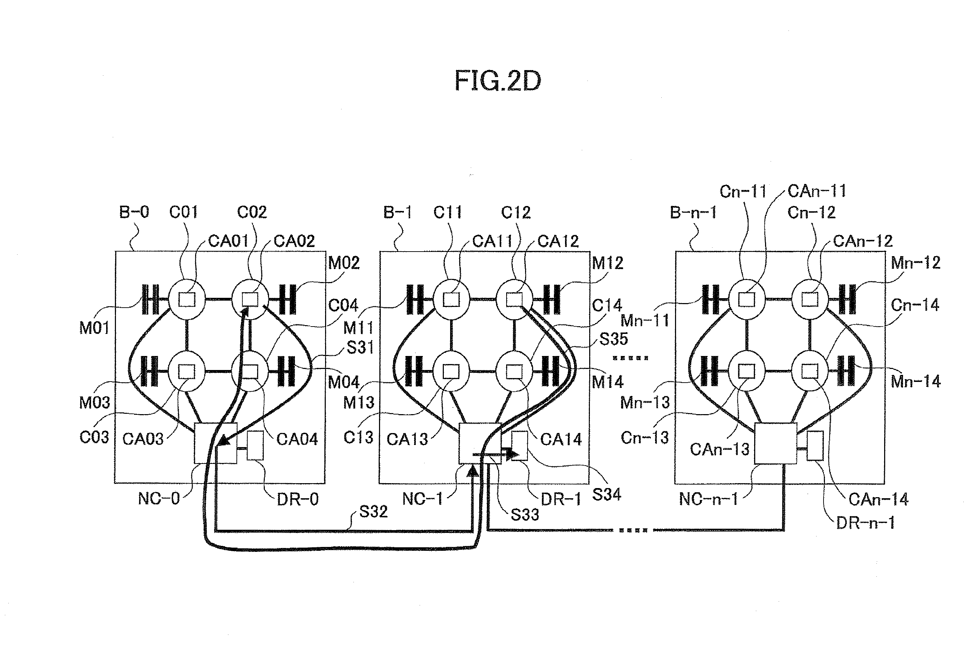

In the information processing apparatus having the configuration depicted in FIG. 1, a case is now assumed where the CPU C belonging to a certain board B, for example, the CPU C02 of the board B-0, requires data. In a case where the cache memory CA02 of the CPU C02 has the data, the CPU C02 obtains the data from the cache memory CA02, as depicted in FIG. 2 (step S1).

Next, in a case where the own cache memory CA02 does not have the data, the CPU C02 issues a reading request (hereinafter, simply referred to as a read request) to the node controller NC-0 included in the board B-0 on which the CPU C02 is mounted (step S11), as depicted in FIG. 2B. When receiving the read request from the CPU C02, the node controller NC-0 looks up the board B that manages the reading target data. It is noted that each node controller NC recognizes the board B that manages the address for identifying the data storage area of each one of the n boards B-0, B-1, ... and B-n-1. In other words, each one of the individual node controllers NC recognizes which board B is the board that has the memory M including the address that each address of the memory space of the information processing apparatus is, and it recognizes the node controller NC belonging to the board that manages the address that is the target of the read request. For this purpose, the node controller NC has, for example, table data indicating correspondence relationship between the address of the memory space of the information processing apparatus and the board that manages the address. It is noted that "the board that manages each address" means the board to which the memory M having the address belongs to.

The node controller NC receives the read request and reads the table data, for example. Thus, the node controller NC recognizes that the board B that manages the address of the reading target data is the board B-1. That is, the address of the reading target data belongs to any one of the four memories M11, M12, M13 and M14 the board B-1 has, and the reading target data is stored at the address. The node controller NC-0 then transfers the read request to the node controller NC-1 of the board B-1 (step S12).

The node controller NC-1 having received the read request from the node controller NC-0 searches the own directory DR-1 (step S13). It is assumed that as a result of the search, it has been determined that the CPU that stores the data which is stored at the address corresponding to the read request is the CPU C01 of the board B-0, and also, the CPU C01 exclusively (Exclusive) stores the data. "The CPU C stores the data" means that the cache memory CA of the CPU C stores the data. Further, "exclusively stores" means that the CPU C currently storing the data (not being Invalid) is only the CPU C01 among the CPUs all the boards B-0, B-1, ... and B-n-1 have.

In this case, the node controller NC-1 issues a snoop to the CPU C01, and also, updates the own directory DR-1 (step S14). Specifically, by issuing the snoop, it instructs the CPU C01 to transfer the reading target data that the CPU C01 itself stores to the requester CPU C02 that requests the data, and also, delete the reading target data that the CPU C01 itself stores. The CPU C01 having received the snoop transfers the data that the CPU 01 itself stores to the requester CPU C02 (step S15), and also, deletes the data having been transferred to the requester CPU from the own cache memory CA01.

Further, the node controller NC-1 updates the entry of the own directory DR-1 concerning the address at which the reading target data has been stored (step S14). Specifically, the data having been stored at this address has been originally stored by the CPU C01, and this data has been transferred to the CPU C02, and has been deleted from the CPU C01. As a result, currently, the CPU C02 exclusively stores this data. Thus, the entry of the directory DR-1 is updated into information indicating that the CPU C02 exclusively stores the data. It is noted that the CPU issuing a read request (in the case of the above-mentioned example, the CPU C02) may be referred to as a requester CPU.

Next, it is assumed that the requester CPU C02 has issued a read request (step S21), and reading target data is stored at an address belonging to the memory M03 of the memories included in the board B-0 to which the CPU C02 belongs, i.e., the four memories M01, M02, M03 and M04. In this case, the node controller NC-0 having received the read request issued by the CPU C02 searches the own directory DR-0 (step S22). It is assumed that as a result of the search, according to the information of the directory DR-0, it has been determined that there is no CPU that stores (not being Invalid) the data which is stored at the address corresponding to the read request in the information processing apparatus. In this case, the node controller NC-0 directly reads the memory M03 in which the reading target data is stored, and transfers the read data to the requester CPU (C02) (step S23).

Next, a case of transferring data stored by the CPU of the board B other than the board B to which the requester CPU belongs will be described with FIG. 2D. The same as the case of FIG. 2B, since the own cache memory CA02 does not have the data, the CPU C02 issues a read request to the node controller NC-0 included in the board B-0 (step S31). When having received the read request from the CPU C02, the node controller NC-0 reads the table data and looks up the board B that manages the reading target data. Also here, the same as the case of FIG. 2B, it is assumed that the board which manages the address of the reading target data is the board B-1. In this case, the node controller NC-0 transfers the read request to the node controller NC-1 of the board B-1 (step S32).

The node controller NC-1 having received the read request from the node controller NC-0 searches the own directory DR-1 (step S33). It is assumed that as a result of the search, it has been determined that the CPU which stores the data that is stored at the address corresponding to the read request is the CPU C12 of the board B-1, and also, the CPU C12 stores the reading target data exclusively. In this case, the node controller NC-1 issues a snoop to the CPU C12, and also, updates the own directory DR-1 (step S34). As a result, the CPU C12 having received the snoop transfers the reading target data stored by the CPU C12 itself to the CPU C02 (step S35), and also, deletes this data from the own cache memory CA01. Further, the node controller NC-1 updates the entry concerning address at which the reading target data has been stored, in the own directory DR-1 (step S34). That is, the directory DR-1 is updated into information indicating that the data stored at this address is exclusively stored by the CPU C02.

Next, with FIG. 3, a configuration example of the directory DR applicable to the embodiment 1 will be described. In FIG. 3, for example, a memory space MS that is a part of a memory space that each board B has is schematically depicted at the left end. To the memory space MS, memory addresses MA 0x000 to 0x1000 are given, for example. Further, FIG. 3 depicts a part DRR of the directory DR corresponding to the memory space MS. Each one (for example, MS-i) of the memory addresses 0x000 to 0x1000 of the memory space MS is given to the data storage area having the capacity of 64 bytes, for example.

In the directory DR, one entry (2 bytes) DE-i is allocated to each data storage area (for example, MS-i) having the capacity of 64 bytes of the memory space. Further, according to the embodiment 1, the size of a block DRR-b handled by one time of accessing the directory DR by the node controller NC is 32 entries. In FIG. 3, for the sake of convenience of description, the block DRR-b (total size: 2 × 32 = 64 bytes) of 32 entries is depicted to have a configuration of 8 lines × 8 bytes (64 bits). As mentioned above, the block DRR-b includes 32 entries, and each entry has the configuration indicated by the entry DE-j in FIG. 3, for example. It is noted that the corresponding memory address in the memory space is uniquely determined by the place of each entry in the directory DR. Further, the node controller NC recognizes the place of the entry in the directory DR corresponding to each memory address of the memory space. Thus, in a case of looking up the CPU C or board B storing the data, the node controller NC recognizes the corresponding entry of the directory DR based on the address of this data (i.e., the memory address in the memory space).

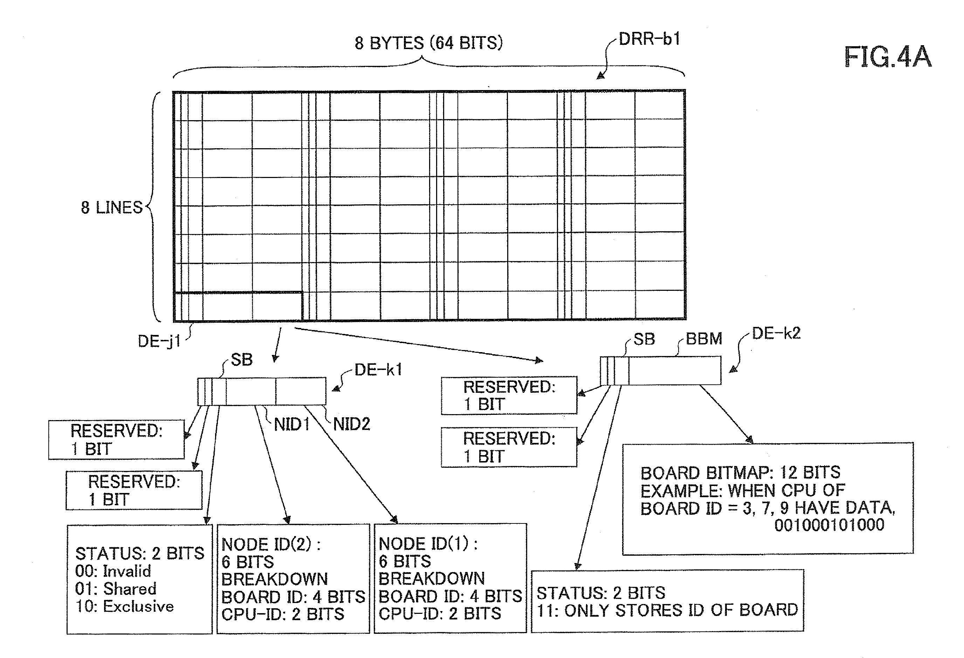

Next, with FIG. 4A, the format of the directory of a reference example will be described. In a case of an example of FIG. 4A, each entry DE-j1 included in the block DRR-b1 of 32 entries is any one of two types of formats, i.e., DE-k1 of A-1 type and DE-k2 of A-2 type. In the entry DE-k1 of A-1 type, the first 2 bits of 2 bytes (16 bits) are not used (Reserved), and the subsequent 2 bits are status bits (in the figure, STATUS) SB. The status bits SB indicate whether data stored by the CPU C is invalid (Invalid: 00), it is shared with the other CPU C (Shared: 01) or it is stored exclusively (Exclusive: 10).

The subsequent 6 bits are bits NID1 indicating a node ID (IDentifier), and the breakdown of the 6 bits is 4 bits of a board ID and 2 bits of a CPU-ID. The board ID is information for identifying each of the n boards B-0, B-1, ... and B-n-1, and the respective board IDs of the n boards B-0, B-1, ... and B-n-1 are, for example, 0, 1, ... and n-1. Further, the CPU-ID is information for identifying the CPU C included in each board, and for example, the CPUs C01, C02, C03 and C04 of the board B-0 have the CPU-IDs 0, 1, 2 and 3, respectively. Similarly, the CPUs C11, C12, C13 and C14 of the board B-1 also have the CPU-IDs 0, 1, 2 and 3, respectively. Similarly, the CPUs Cn-11, Cn-12, Cn-13 and Cn-14 of the board B-n also have the CPU-IDs 0, 1, 2 and 3, respectively.

Also the subsequent 6 bits of the entry DE-k1 are bits NID2 indicating a node ID (IDentifier). The breakdown thereof is the same as the above-mentioned bits NID1 indicating the node ID. The node ID NID2 corresponds to the node other than the node to which the node ID NID1 corresponds.

To the node ID, the identification information of the node that stores data is given. That is, to the board ID, the identification information of the board that stores data is given, and to the CPU-ID, the identification information of the CPU that stores the data, among the CPUs mounted on the board indicated by the board ID.

Thus, in the case of A-1 type, each entry can store the two node IDs. As a result, in a case where the number of CPUs sharing data is two or less, it is possible to store the information of all the CPUs sharing the data in the entry DE-k1. However, in a case where the number of CPUs C sharing data is three or more, it is not possible to store the information of all the CPUs sharing the data, from the viewpoint of the size of the entry.

The A-2 type can store information indicating the three or more board IDs even in a case where the number of CPUs sharing data is three or more. In a format of the entry DE-k2 of A-2 type, as depicted in FIG. 4A, the first 2 bits are not used (Reserved), and the subsequent 2 bits are status bits SB. The status bits SB store information (11) indicating that the entry is of A-2 type. The subsequent 12 bits of the entry DE-k2 indicate a board bitmap BBM. Here, a case is assumed where the number of all the boards the information processing apparatus has is 12, the respective bits of the BBM correspond to the 12 boards, respectively, and the boards having the corresponding bits of "1" share data. Thus, for example, in a case where the CPUs of the respective boards of the board IDs 3, 7 and 9 store data, the board bitmap BBM is 001000101000.

In the case of the entry DE-k2 of A-2 type, it is possible to deal with the case where the number of CPUs sharing data is three or more. However, in the entry, only the board IDs are indicated, and the respective CPU-IDs are not indicated. Thus, it is not possible to determine the CPUs that store the data. As a result, in case of issuing a snoop, it is necessary to issue snoops to all the CPUs the corresponding boards have. Thus, for example, in a case where the entry of A-2 type is used, the number of times of issuing a snoop increases, and a case is assumed where the performance of the system of the information processing apparatus is degraded.

In the embodiment 1, such a problem is considered, and it is made possible to avoid an increase in the number of times of issuing a snoop even in a case where the three or more CPUs share data, by devising a format of the directory DR.

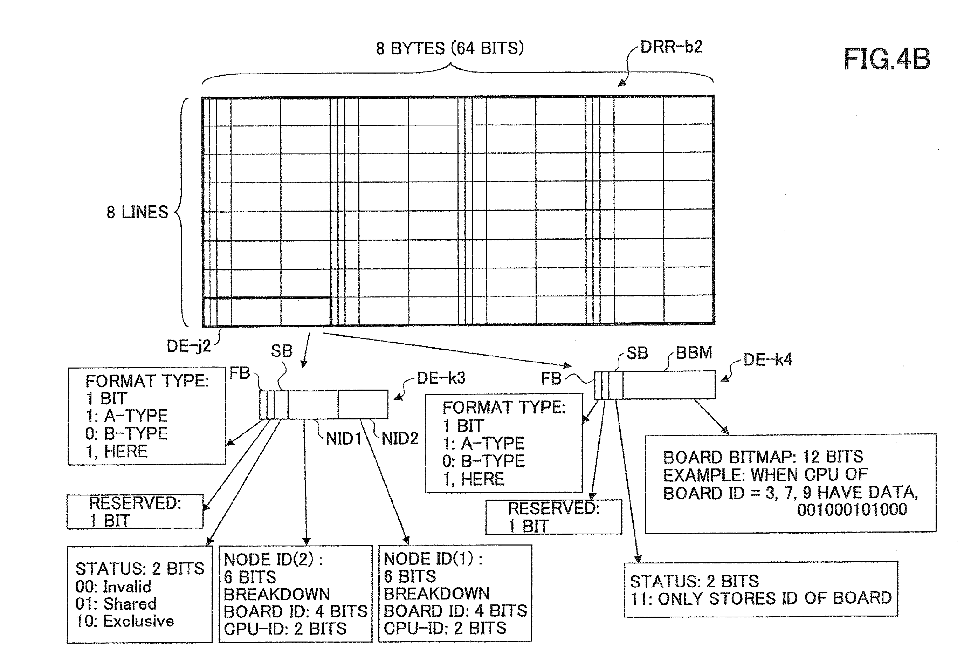

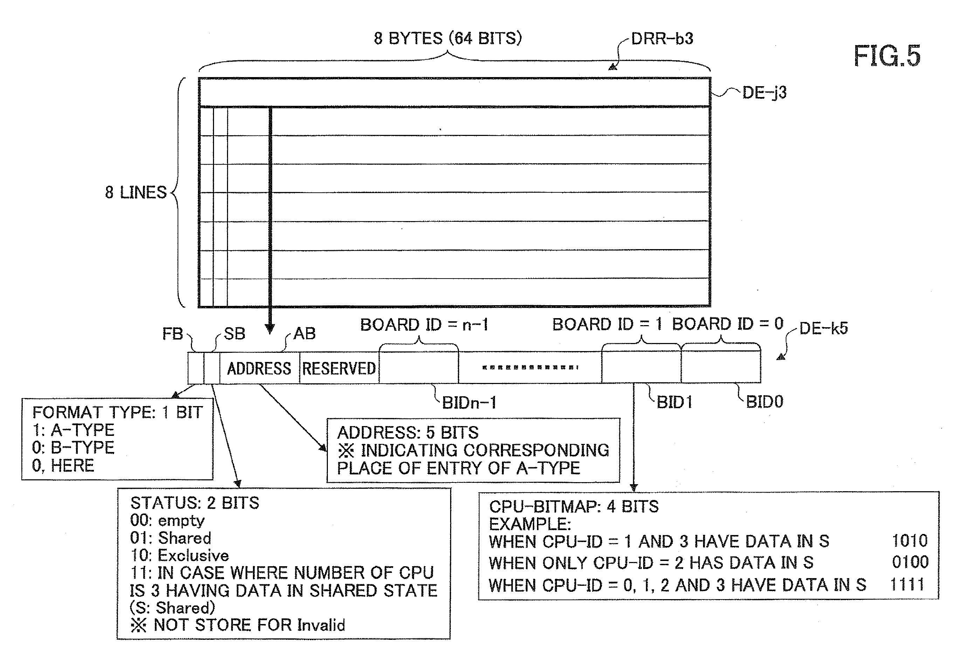

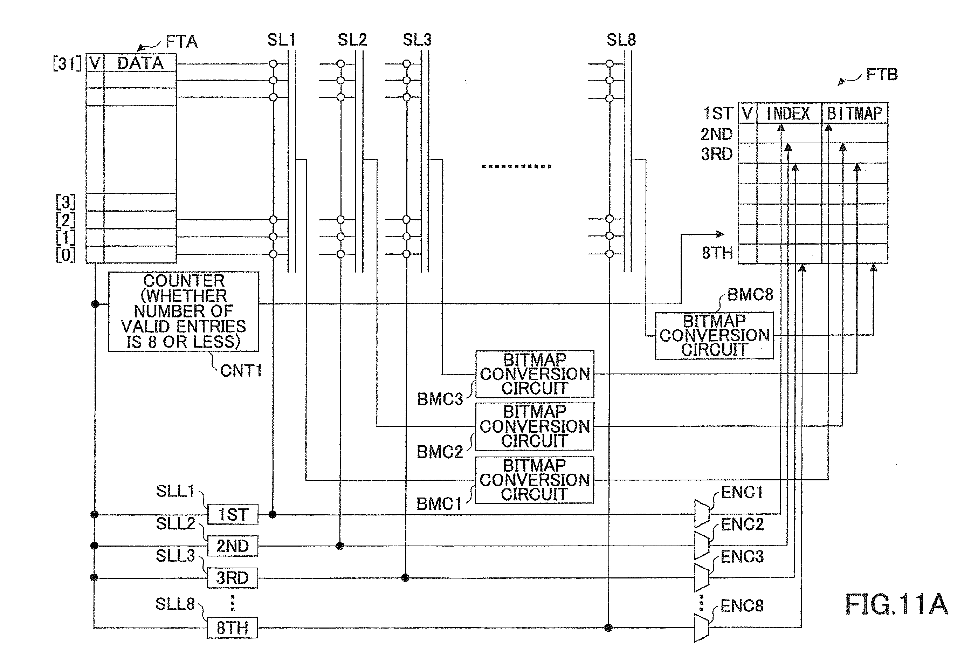

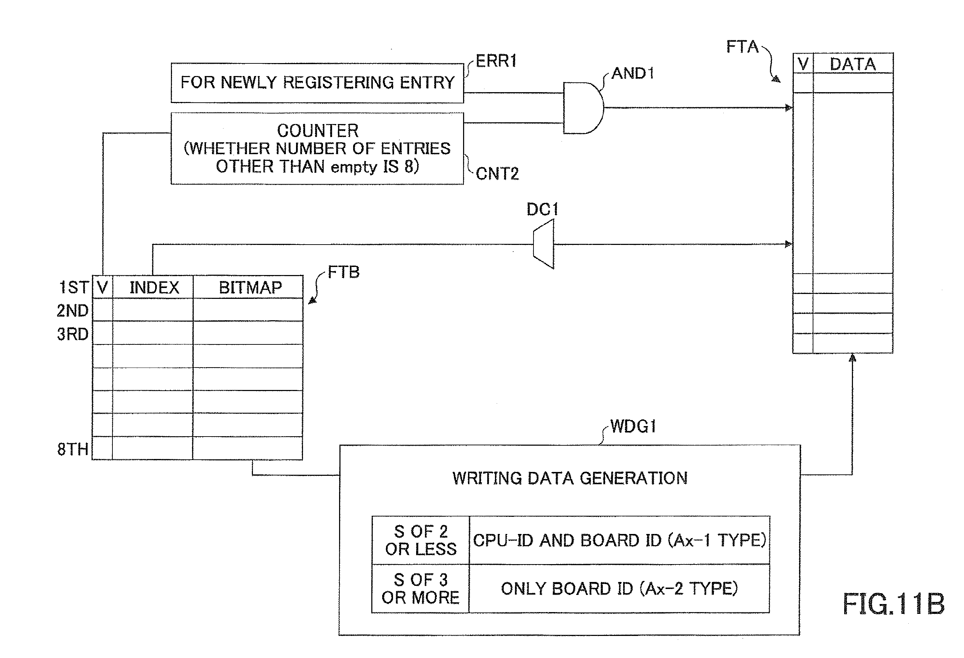

According to the embodiment 1, a format conversion part FC described later with FIGs. 11A, 11B and 12 is provided in the node controller NC. In a case of the embodiment 1, the directory DR uses entries of A-type (including Ax-1 type and Ax-2 type) depicted in FIG. 4B. Then, in a case where the number of CPUs C sharing data is three or more, the format of the A-type of FIG. 4B is converted (hereinafter, referred to as format conversion) into a format of B-type depicted in FIG. 5 (described later). Format conversion from A-type into B-type is carried out for each one of the blocks of the directory DR. As a result, there may be a state of, among the blocks of the directory DR, some blocks having the formats of A-type and the other blocks having the formats of B-type. It is noted that in the same block, the format of A-type and the format of B-type are not mixed together. Further, the respective entries belonging to each block of the directory DR are not changed through format conversion, and are constantly fixed. That is, in a case of B-type, the number of registerable entries is up to 8 for each block as described later. Thus, it is not possible to register all the information of 32 entries belonging to one block. However, even in a case of B-type, it is not possible to register all the information of the 32 entries belonging to the block at the block, but the fact that the 32 entries belong to the block is maintained. This is obtained from recognizing by the node controller NC the entries of the directory DR corresponding to the addresses managed by the node controller NC itself by using the places of these entries.

The format of FIG. 4B is approximately the same as the format of FIG. 4A, and duplicate description will be omitted. In a case where the entry DE-j2 included in the block DRR-b2 depicted in FIG. 4B is of Ax-1 type (DE-k3), the first 1 bit is a format bit FB, different from Ax-1 type of FIG. 4A described above. The format bit FB indicates a format type of the entry. In a case where the format type is "1", this indicates that the entry is of A-type. In a case where the format type is "0", this indicates that the entry is of B-type. The entry DE-k3 depicted in FIG. 4B is of Ax-1 type, and thus, the format bit FB is "1". Similarly, also in a case where the entry DE-j2 included in the block DRR-b2 depicted in FIG. 4B is of Ax-2 type (DE-k4), the first bit of the entry is the format bit FB, different from Ax-2 type of FIG. 4A. Since the entry DE-k4 depicted in FIG. 4B is of Ax-2 type, the format bit FB is "1".

Next, with FIG. 5, the format of B-type will be described. As depicted in FIG. 5, in the format of B-type, the size of the block DDR-b3 (64 bytes) is the same as the block DDR-b2 of the format of A-type depicted in FIG. 4B. However, the number of entries is 8 in the example of FIG. 5. Thus, the size of each entry DE-k5 of B-type is 8 bytes (64 bits). The breakdown of each entry DE-k5 is depicted below.

The first 1 bit of the entry DE-k5 is the format bit FB. Since the entry DE-k5 depicted in FIG. 5 is of B-type, the format bit FB is "0". The subsequent 2 bits are status bits SB. The status bits SB indicate whether the entry is empty (empty: 00), data is shared by two or less CPUs (Shared: 01), data is exclusively stored (Exclusive: 10) or data is shared by three or more CPUs (Shared: 11). In a case where data is invalid (Invalid), the entry corresponding to the data is not included in the block DDR-b2.

The subsequent 5 bits are address bits AB, and are information indicating which entry of the block of the format of A-type the entry DE-k5 corresponds to. The remaining 56 bits of the entry DE-k5 store n CPU-bitmaps BID0, BID1, ... and BIDn-1. The n CPU-bitmaps correspond to the n boards B-0, B-1, ... and B-n-1 (board IDs: 0 to n-1), respectively. In a case where the number of the boards is 12, the number of the CPU-bitmaps is 12. Further, each one of the CPU-bitmaps BID0, BID1, ... and BIDn-1 has 4 bits, and the 4 bits correspond to the four CPUs included in each board.

For example, in a case where the CPUs of the CPU-IDs of 1 and 3 store data among the CPUs included in the board B-1, the CPU-bitmap BID1 corresponding to the board B-1 is "1010". Similarly, in a case where only the CPU of the CPU-ID of 2 stores data among the CPUs included in the board B-1, the CPU-bitmap BID1 corresponding to the board B-1 is "0100". In a case where the CPUs of the CPU-IDs of 0, 1, 2 and 3 (all four) store data among the CPUs included in the board B-1, the CPU-bitmap BID1 corresponding to the board B-1 is "1111".

It is noted that in the case where the number of the boards is 12, a total of 48 bits are used by the CPU-bitmaps BID0, BID1, ... and BID11, and the remaining 8 bits are not used (Reserved).

As mentioned above, in the format of A-type depicted FIG. 4B, there is a case where it is not possible to store information for identifying all the CPUs C sharing data in relation to the size (2 bytes) of each entry of the directory DR. In contrast thereto, in the format of B-type depicted in FIG. 5, the size (8 bytes) of each entry is large, and thus, it is possible to store information for identifying all the CPUs C sharing data in the entry. As a result, in the example using FIG. 5, it is not necessary to issue snoops to all the CPUs C included in the boards B identified by the directory DR as in the case of using Ax-2 type, and it is sufficient to only issue snoops to the CPUs C identified by the directory DR. Thus, by using the format of B-type, it is possible to avoid degradation of the performance of system of the information processing apparatus caused by an increase in the number of times of issuing a snoop. Further, according to the embodiment 1, the format of A-type is converted into the format of B-type for each one of the blocks where appropriate. Thus, it is possible to avoid degradation of the performance of system of the information processing apparatus without increasing the capacity of the directory DR.

It is noted that in the case of the format of B-type, the number of entries that can be stored for each one of the blocks is 8. Thus, the format is converted into A-type (for example, Ax-2 type) in a case where the number of entries to be stored (not being Invalid) in the block is 9 or more. "The number of entries to be stored in the block" means the number of the data storage areas for which the CPUs C store data (not being Invalid) from among the 32 data storage areas in the memory space corresponding to the respective 32 entries that belong to the block. "The number of data" is such that data stored in the one data storage area is counted as "one".

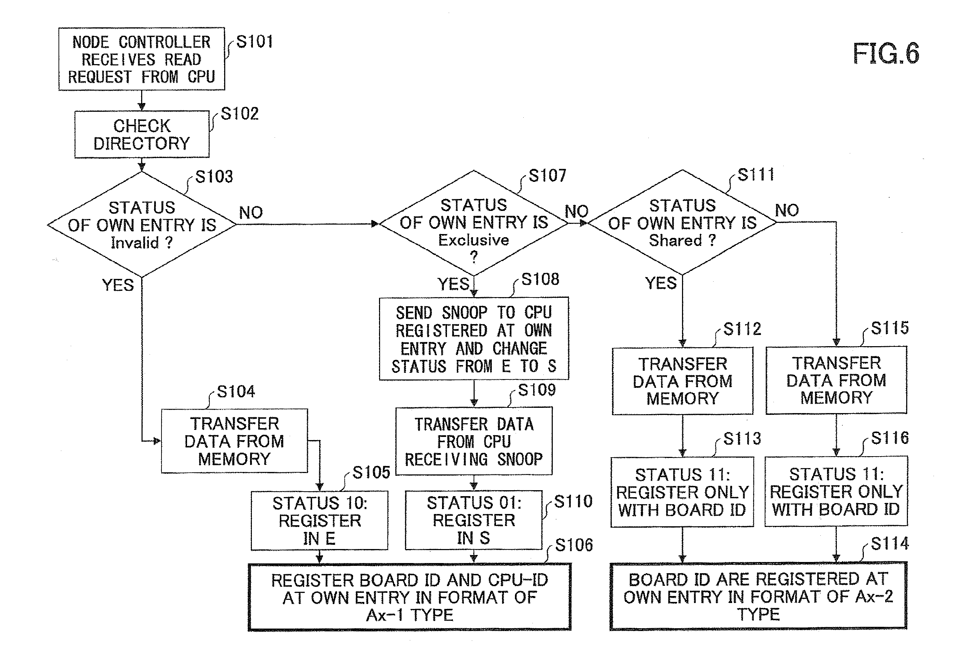

FIG. 6 is a flowchart depicting a flow of operations of the node controller NC in a case of having received a read request from the CPU C in the reference example of FIG. 4A. FIG. 6 depicts operations in particular in a case where the CPUs will share data.

In FIG. 6, in step S101, when the node controller NC that manages the address of reading target data has received the read request from the requester CPU C, the node controller NC searches the own directory DR (step S102). In a case where the status bits SB of the entry of the directory DR obtained from the search indicate Invalid (step S103 YES), the process proceeds to step S104. If this is not the case (step S103 NO), the process proceeds to step S107.

The entry of the directory DR obtained from the search means the entry corresponding to the address of the reading target data, and hereinafter, will be referred to as an own entry. Further, the entries other than the own entry in the same block will be referred to as other entries. It is noted that the fact that the status bits of the entry are Invalid (00) means that, as depicted in FIG. 4A, the entry is of Ax-1 type. This is because the status bits are constantly 11 in the format of Ax-2 type.

In step S104, the node controller NC reads the data from the data storage area in the memory M corresponding to the own entry, and transfers it to the requester CPU C (step S104). At this time, the requester CPU C stores the data in the own cache memory CA. Next, with the status bits SB of the own entry as Exclusive, the node controller NC registers the CPU-ID of the requester CPU C and the board ID having the requester CPU at the own entry (steps S105, S106).

In step S107, it is determined whether the status bits SB of the own entry are Exclusive. In a case where the status bits are Exclusive (step S107 YES), the process proceeds to step S108. If this is not the case (step S107 NO), the process proceeds to step S111. It is noted that the fact that the status bits SB are Exclusive (10) means that, as depicted in FIG. 4A, the entry is of Ax-1 type.

In step S108, the node controller NC issues a snoop to the CPU registered at the own entry, and notifies the CPU to which the snoop has been issued of changing the data storing mode of the own entry from Exclusive into Shared. Next, in step S109, the node controller NC transfers the data from the CPU of the destination of the snoop to the requester CPU. Next, in step S110, with the status bits SB of the own entry as Shared, the node controller NC registers the CPU ID of the requester CPU and the board ID of the board B having the requester CPU at the own entry (steps S105, S106).

In step S111, it is determined whether the status bits SB of the own entry are Shared. It is noted that the fact that the status bits SB are Shared means that, as depicted in FIG. 4A, the entry is of Ax-1 type. In a case where the status bits are Shared (S111 YES), the process proceeds to step S112. If this is not the case (S111 NO), the process proceeds to step S115.

In step S112, the node controller NC reads the data from the data storage area of the memory M corresponding to the own entry, and transfers it to the requester CPU. At this time, the requester CPU stores the transferred data in the own cache memory CA. Next, with the status bits SB of the own entry as 11, the node controller NC registers the board ID of the board having the requester CPU at the own entry in the format of Ax-2 type (steps S113, S114).

That is, in the case where the status bits SB of the own entry are Shared in step S111, this means that already the two CPUs C have been registered at the own entry. Since further the requester CPU will be registered at the own entry in this state, the number of the CPUs registered at the own entry will be three. Thus, the own entry is changed from the format of Ax-1 type in which the maximum value of the number of the registerable CPUs at the entry is two into the format of Ax-2 type in which the number of the boards registerable at the entry is three or more. Then, the node controller NC registers the board ID of the board having the requester CPU, together with the board ID(s) of the board(s) having the two CPUs having been already registered at the own entry.

It is noted that the reason for transferring the data from the memory M in steps S112 and S115 is as follows. That is, in the cases of steps S112 and S115, the number of the CPUs storing data is two or more. In this case of the reference example, the control is simplified by uniformly reading the data from the memory M and transferring it.

In the step S115, the node controller NC reads the data from the data storage area corresponding to the own entry of the memory M, and transfers it to the requester CPU. At this time, the requester CPU stores the data in the own cache memory CA. Next, the node controller NC registers the board ID of the board having the requester CPU C at the own entry (steps S116, S114). That is, in the case where the status bits of the own entry are not Shared (NO of S111), S103 NO and S107 NO have been passed through and thus the status is neither Invalid nor Exclusive. Thus, in this case, it is seen that the status bits are 11 and the own entry is of Ax-2 type.

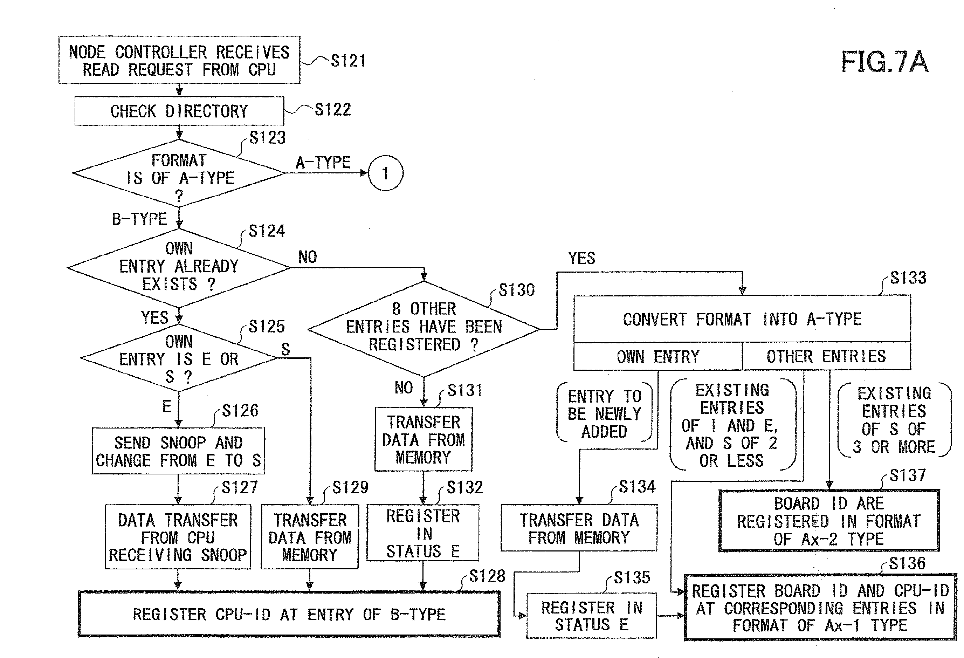

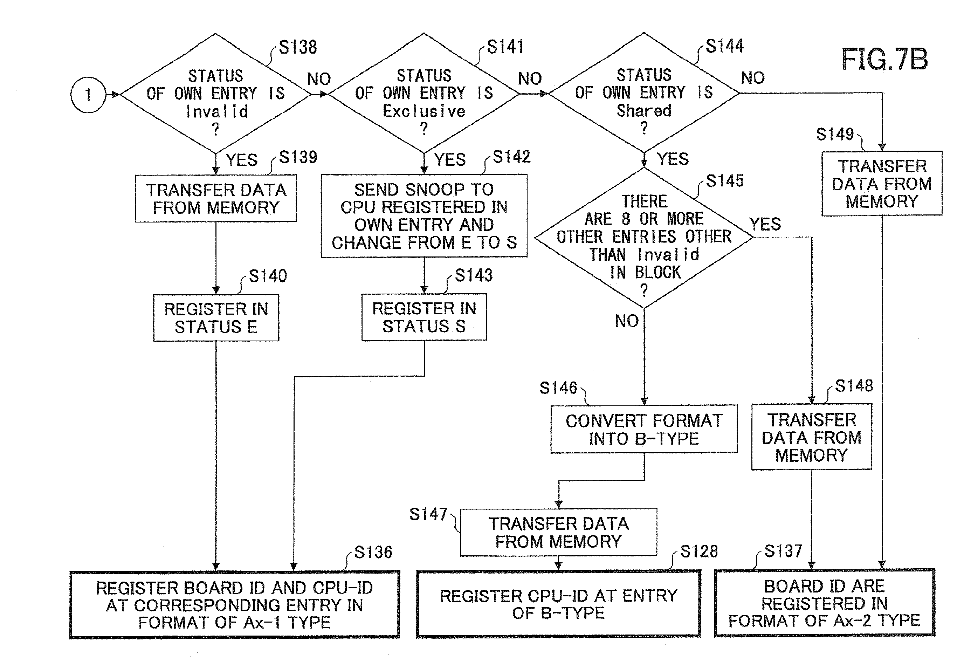

FIGs. 7A and 7B are a flowchart depicting a flow of operations of the node controller NC in a case of having received a read request from the CPU C in the information processing apparatus of the embodiment 1. FIGs. 7A and 7B in particular depict an operation example for a case where the CPUs will share data. It is noted that whether the CPUs will share data (in Shared) or will have data exclusively (in Exclusive) is determined by an instruction given externally.

In FIG. 7A, when the node controller NC managing the address of the reading target data has received a read request from the requester CPU C in step S121, the node controller NC searches the own directory DR (step S122). In a case where the format of the block the own entry belongs to obtained from the search is of B-type (step S123 B-type), the node controller NC proceeds to step S124. The node controller NC proceeds to step S138 of FIG. 7B in a case where the format is of A-type (step S123 A-type). The format of the block can be determined by reading the FB or so.

In the case where it has been determined that the format of the block is of B-type, the node controller NC determines whether the own entry already exists in the format of B-type in step S124. In a case where the own entry already exists in the format of B-type (step S124 YES), the process proceeds to step S125. On the other hand, in a case where the own entry does not exist yet in the format of B-type (step S124 NO), the process proceeds to step S130. It is noted that the maximum number of the registerable entries is 8 at the block in the format of B-type. Thus, there may be a case where the own entry does not exist in the format of B-type.

In the case where it has been determined in S124 that the own entry exists in the block of B-type, the node controller NC determines the status bits SB of the own entry in step S125. When the status bits of the own entry are Exclusive (step S125 E), the process proceeds to step S126. When the status bits SB are Shared (step S125 S), the process proceeds to step S129.

In step S126, the node controller NC issues a snoop to the CPU registered at the own entry, and notifies the CPU to which the snoop has been issued of changing the storing mode of this data from Exclusive into Shared. Further, at this time, the node controller NC changes the status bits SB of the own entry into Shared. Next, in step S127, the node controller NC transfers the data from the CPU that is the destination of the snoop to the requester CPU. At this time, the requester CPU stores the transferred data in the own cache memory. Next, in step S128, the node controller NC registers the CPU-ID of the requester CPU at the own entry.

On the other hand, in a case where it has been determined in S125 that the status bits SB of the own entry are Shared, the node controller NC reads the data from the memory M and transfers it to the requester CPU in step S129. At this time, the requester CPU stores the transferred data in the own cache memory. Next, the node controller NC registers the CPU-ID of the requester CPU at the own entry in step S128.

In a case where no own entry exists in the block, the node controller NC determines in step S130 whether the 8 entries have been already registered at the block. When the 8 other entries have been already registered (step S130 YES), the process proceeds to step S133. When the number of the registered other entries is less than 8 (step S130 NO), the process proceeds to step S131.

In the case where the 8 entries have not been registered at the block, the node controller NC reads the data from the memory M in step S131, and transfers it to the requester CPU. At this time, the requester CPU stores the transferred data in the own cache memory. Next, in steps S132 and S128, the node controller NC adds an own entry to the block with the status bits SB as Exclusive, and registers the CPU-ID of the requester CPU at the added own entry.

On the other hand, in the case where the 8 other entries have been already registered at the block, the node controller NC converts the format of the block from B-type into A-type in step S133. Here, first the data corresponding to the own entry that will be added to the block is read from the memory M and transfers it to the requester CPU (step S134). Then, with the status bits SB of the own entry as Exclusive (step S135), the own entry is added to the block in the format of Ax-1, and the CPU-ID of the requester CPU and the board ID of the board in which the requester CPU is mounted are registered at the own entry (step S136).

On the other hand, as for the entries in which the number of the registered CPUs is two or less from among the 8 other entries already registered at the block, the respective board ID(s) and CPU ID(s) will be registered in the format of Ax-1 type (step S136). At this time, as for the entries having the status bits SB of empty in the format of B-type, they are registered at the block in the format of Ax-1 type with the status bits SB as Invalid. Further, also for the other entries belonging to the block and not included in the above-mentioned 8 entries, they are registered at the block in the format of Ax-1 type with the status bits SB as Invalid. Further, as for the entries in which the number of the registered CPUs is three or more from among the 8 other entries already registered at the block, the respective board IDs are registered at the block in the format of Ax-2 (step S137).

In the case where the format of the block is A-type, the node controllers NC determines in step S138 of FIG. 7B whether the status bits SB of the own entry indicate Invalid. In a case where they indicate Invalid (step S138 YES), the process proceeds to step S139. If this is not the case (step S138 NO), the process proceeds to step S141. The fact that the status bits SB are Invalid (00) means that the entry is of Ax-1 type, as depicted in FIG. 4B.

In step S139, the node controller NC reads the data from the data storage area of the memory M corresponding to the own entry, and transfers it to the requester CPU C. At this time, the requester CPU C stores the transferred data in the own cache memory CA. Next, with the status bits SB of the own entry as Exclusive, the node controller NC registers at the own entry the CPU-ID of the requester CPU C and the board ID of the board B having the requester CPU (steps S140, S136).

In step S141, it is determined whether the status bits SB of the own entry are Exclusive. In a case where the status bits are Exclusive (S141 YES), the process proceeds to step S142. If this is not the case (S141 NO), the process proceeds to step S144. The fact that the status bits SB are Exclusive (10) means that the entry is of Ax-1 type, as depicted in FIG. 4B.

In step S142, the node controller NC issues a snoop to the CPU registered in the own entry, and notifies the CPU to which the snoop has been issued of changing the data storing mode of the entry from Exclusive into Shared. Next, the node controller NC reads the data from the CPU that is the destination of the snoop and transfers it to the requester CPU. Next, with the status bits SB of the own entry as Shared, the node controller NC registers at the own entry the CPU-ID of the requester CPU C and the board ID of the board B having the requester CPU (steps S143, S136).

In step S144, it is determined whether the status bits SB of the own entry are Shared. The fact that the status bits SB are Shared (01) means that the entry is of Ax-1 type, as depicted in FIG. 4B. In a case of Shared (S144 YES), the process proceeds to step S145. If this is not the case (S144 NO), the process proceeds to step S149.

In step S145, the node controller NC proceeds to step S148 when there are the 8 or more entries other than the status bits SB of Invalid in the block to which the own entry belongs (step S145 YES). When there are the 7 or less entries other than the status bits of Invalid in the block to which the own entry belongs (step S145 NO), the process proceeds to step S146. This is because when there are the 7 or less entries other than Invalid, the entries other than Invalid come to amount to 8 or less even after adding the own entry, and thus, it falls within the maximum number, 8, of the registerable entries at the block in the format of B-type.

In step S146, the node controller NC converts the format of the block from A-type into B-type. Then, it reads the data from the data storage area of the memory M corresponding to the own entry, and transfers it to the requester CPU (step S147). At this time, the requester CPU C stores the transferred data in the own cache memory CA. Next, the node controller NC additionally registers the own entry at the block in the format of B-type, and registers in the additionally registered own entry the CPU ID of the requester CPU C (step S128).

In a case where there are the 8 or more entries other than Invalid, the data is read from the data storage area of the memory M corresponding to the own entry and is transferred to the requester CPU in step S148. At this time, the requester CPU C stores the transferred data in the own cache memory CA. Next, the node controller no changes the own entry into the format of Ax-2 type, and registers at the own entry the board ID of the board having the requester CPU C (step S137).

That is, the case in step S144 where the status bits SB of the own entry are Shared means that already the two CPUs C have been registered at the own entry. The number of the CPUs C that will be registered at the own entry becomes 3 since the requester CPU will be further registered in this state. Thus, the format of Ax-1 type in which the maximum number of the registerable CPUs for each entry is 2 is changed into the format of Ax-2 in which the number of the registerable boards for each entry is three or more. Then, the node controller NC registers the board ID of the board B having the requester CPU together with the board ID(s) of the board(s) B having the two CPUs already registered at the own entry.

It is noted that the reason for transferring the data from the memory M in steps S147, S148 and S149 is as follows. That is, steps S147, S148 and S149 correspond to the states of the status bits SB of the own entry being Shared (S144 YES) or of the format of Ax-2 type (step S144 NO). Thus, the number of CPUs having data is two or more. In such a case, although it is possible to take a method of previously setting any one of the two or more CPUs from which the data will be transferred. However, in the case of the embodiment 1, without carrying out such a setting, the data will be uniformly transferred from the memory M, and thus, the control is simplified.

In step S149, the node controller NC reads the data from the data storage area of the memory M corresponding to the own entry and transfers it to the requester CPU. At this time, the requester CPU C stores the transferred data in the own cache memory CA. Next, the node controller NC registers the board ID of the board B having the requester CPU C at the own entry (step S137). That is, in the case where the status bits SB of the own entry are not Shared (Step S144 NO) in step S144, the own entry is neither Invalid nor Exclusive since S138 NO and S141 NO have been passed through. Thus, in this case, it is seen that the status bits SB are 11, and the own entry is of Ax-2 type.

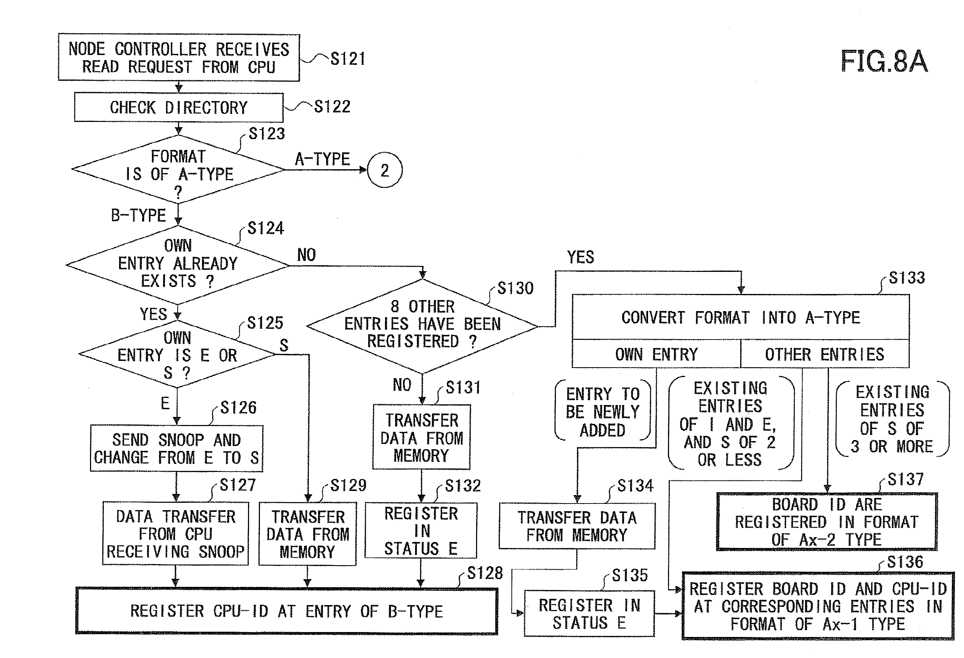

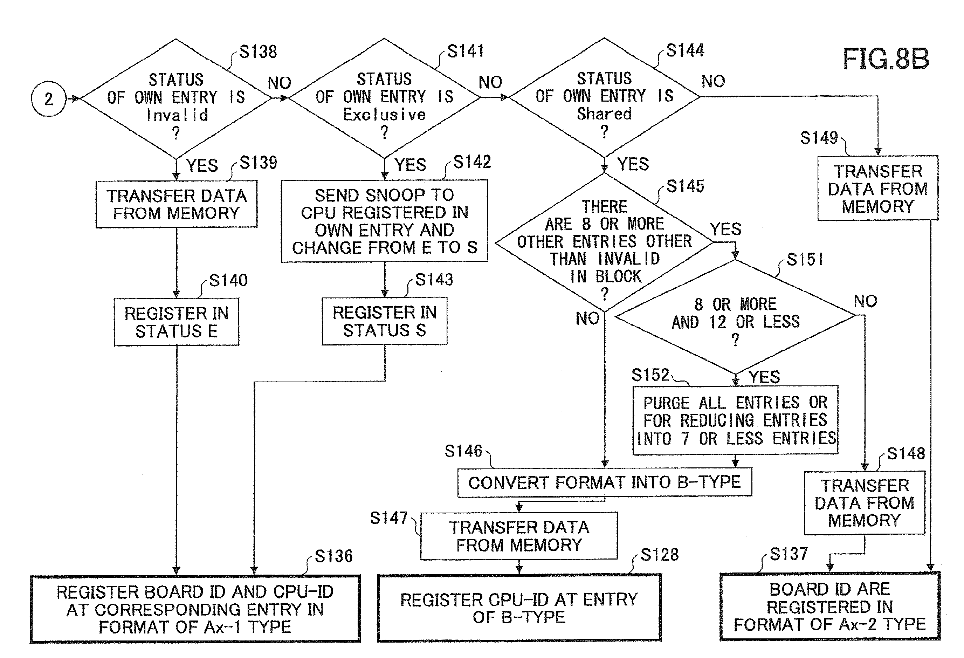

FIGs. 8A and 8B are a flowchart depicting a flow of operations of the node controller NC in a case of having received a read request from the CPU in the information processing apparatus according to the embodiment 1. FIG. 8A and 8B depict another example of operations for a case where the CPUs will share data. The example of FIGs. 8A and 8B is a variant of the example of FIGs. 7A and 7B, the same reference signs are given to those the same or similar to the operations (steps) of FIGs. 7A and 7B, and duplicate description will be omitted.

In the case where the status bits SB of the own entry are Shared, i.e., the two CPUs have been already registered at the own entry (step S144 YES in FIG. 8B), and there are the 8 or more other entries having the status bits SB other than Invalid in the block (step S145 YES), the board IDs are registered in the format of Ax-2 type in the example of FIG. 7B (step S137).

On the other hand, in the example of FIG. 8B, in the case where it has been determined that there are the 8 or more other entries having the status bits SB other than Invalid in the block in step S145, it is further determined in step S151 whether there are the 8 or more and 12 or less other entries having the status bits SB other than Invalid in the block. In a case where there are the 8 or more and 12 or less other entries having the status bits SB other than Invalid in the block (step S151 YES), the process proceeds to step S152. On the other hand, in a case where there are the 13 or more other entries having the status bits SB other than Invalid in the block (step S151 NO), the process proceeds to step S148.

In the case where there are the 8 or more and 12 or less other entries having the status bits other than Invalid in the block, the contents of the entries are deleted (purged), for all the other entries having the status bits other than Invalid or in such a manner that the number of the entries having the status bits other than Invalid may be 7 or less, in step S152. This is because when the number of the entries having the status bits other than Invalid is 7 or less, the entries other than Invalid come to amount to 8 or less even after adding the own entry, and thus, they will fall within the maximum number, 8, of the registerable entries at the block in the format of B-type. The entries from which the contents will be deleted are selected, for example, in the ascending order of the number of entry, from among the entries having the status bits SB other than Invalid. It is noted that the numbers of the entries are given in the order of the corresponding memory addresses in the memory space, for example.

It is noted that the condition "8 or more and 12 or less" is one example. For example, such a numerical value may be selected by which the performance of the information processing apparatus may be maximized, taking into comprehensive consideration the advantage gained as a result of converting the format into B-type and the disadvantage suffered as a result of purging the entries. Actually, an experiment may be carried out using an actual machine for various cases, and the determination may be made by measuring the result of the experiment.

On the other hand, in a case where the number of the entries having the status bits other than Invalid is 13 or more, the data is read from the data storage area of the memory M corresponding to the own entry and is transferred to the requester CPU in step S148. At this time, the requester CPU C stores the transferred data in the own cache memory CA. Next, the node controller NC changes the own entry into the format of Ax-2 type, and registers the board ID of the board having the requester CPU C at the own entry (step S137).

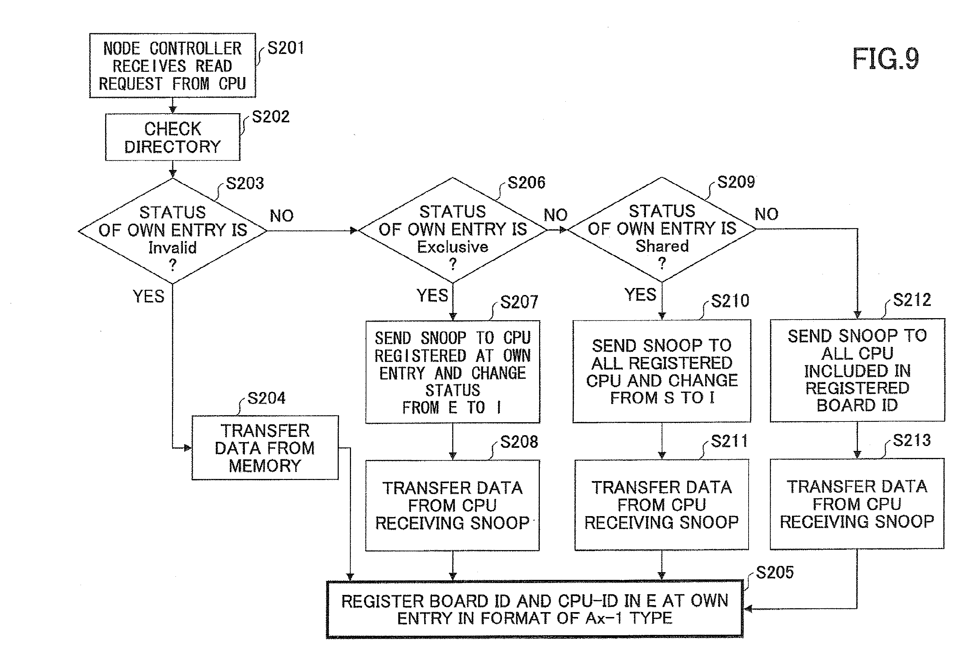

FIG. 9 is a flowchart depicting a flow of operations in a case of having received a read request from the CPU in the reference example of FIG. 4A. FIG. 9 depicts operations for a case where the CPUs will have data without sharing it (i.e., in Exclusive).

In FIG. 9, in step S201, when the node controller NC managing the address of the reading target data has received a read request from the requester CPU C, the node controller NC searches the own directory DR (step S202). In a case where the status bits SB of the entry obtained from the search indicate Invalid (step S203 YES), the process proceeds to step S204. If this is not the case (step S203 NO), the process proceeds to step S206. It is noted that the fact that the status bits SB are Invalid (00) means that the entry is of Ax-1 type. In step S204, the node controller NC reads the data from the data storage area of the memory M corresponding to the own entry and transfers it to the requester CPU (step S204). At this time, the requester CPU C stores the transferred data in the own cache memory CA. Next, with the status bits SB of the own entry as Exclusive, the node controller NC registers at the own entry the CPU-ID of the requester CPU and the board ID of the board B having the requester CPU (step S205).

In step S206, it is determined whether the status bits SB of the own entry are Exclusive. In a case of Exclusive (S206 YES), the process proceeds to step S207. If this is not the case (S206 NO), the process proceeds to step S209. The fact that the status bits SB are Exclusive (10) means that the entry is of Ax-1 type.

In step S207, the node controller NC issues a snoop to the CPU registered at the own entry, notifies the CPU to which the snoop has been issued of changing the data storing mode of the entry from Exclusive into Invalid, and instructs it to delete the reading target data from the own cache memory CA after transferring it. Next, in step S208, the node controller NC transfers the data from the CPU that is the destination of the snoop to the requester CPU. The CPU that is the destination of the snoop responds to the instruction from the node controller NC and deletes the reading target data from the own cache memory CA. Further, the requester CPU stores the transferred data in the own cache memory. Next, in step S205, with the status bits SB of the own entry as Exclusive, the node controller NC registers at the own entry the CPU-ID of the requester CPU and the board ID of the board B having the requester CPU.

In step S209, it is determined whether the status bits SB of the own entry are Shared. The fact that the status bits SB are Shared (01) means that the entry is of Ax-1 type. In a case of Shared (S209 YES), the process proceeds to step S210. If this is not the case (S209 NO), the process proceeds to step S212.

In step S210, the node controller NC issues snoops to all the CPUs registered at the own entry. That is, the node controller NC notifies all the CPUs of changing the data storing mode of the entry from Shared into Invalid, and instructs them to delete the reading target data from the own cache memories CA. Next, in step S211, the node controller NC reads the data from any one (it is possible to previously set it) of the CPUs that are the destinations of the snoops, and transfers it to the requester CPU. All the CPUs that will be the destinations of the snoops respond to the instruction from the node controller NC and delete the data from the own cache memories CA. Further, the requester CPU stores the transferred data in the own cache memory. Next, in step S205, with the status bits SB of the own entry as Exclusive, the node controller NC registers at the own entry the CPU-ID of the requester CPU and the board ID of the board B having the requester CPU.

In step S212, the node controller issues snoops to all the CPUs registered at the own entry. That is, the node controller NC notifies all the CPUs of changing the data storing mode of the entry from Shared into Invalid, and instructs them to delete the reading target data from the own cache memories CA. Next, in step S213, the node controller NC transfers the data from any one of the CPUs storing the reading target data from among the CPUs that are the destinations of the snoops, to the requester CPU. The CPU from which the data is transferred may be previously set. All the CPUs that are the destinations of the snoops respond to the instruction from the node controller NC and delete the data from the own cache memories CA. Further, the requester CPU stores the transferred data in the own cache memory. Next, in step S205, the node controller NC changes the own entry into Ax-1 type. Then, with the status bits SB of the own entry as Exclusive, the node controller NC registers at the own entry the CPU-ID of the requester CPU and the board ID of the board B having the requester CPU.

It is noted that in the case where the status bits SB of the own entry are not Shared (NO of S209), they are neither Invalid nor Exclusive since S203 NO and S206 NO have been passed through. Thus, in this case, the status bits SB are 11, and the own entry is of Ax-2 type.

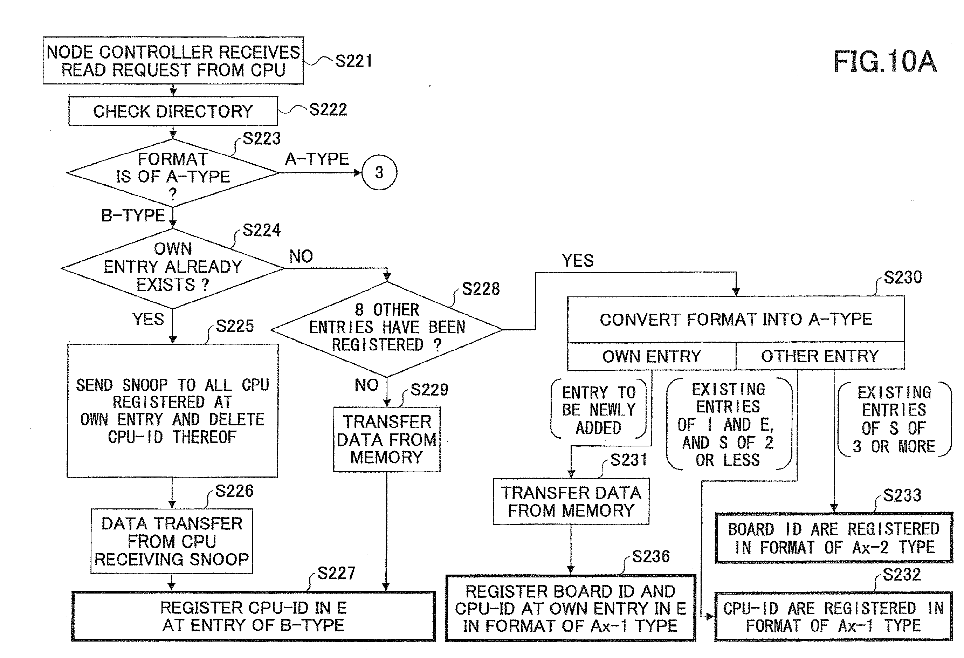

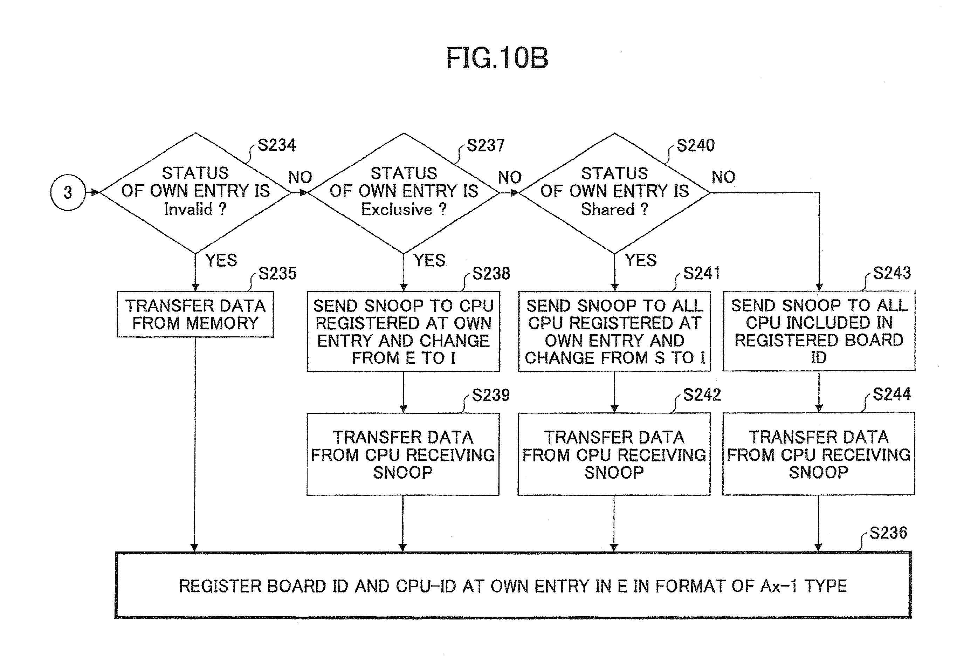

FIGs. 10A and 10B are a flowchart depicting a flow of operations in a case of having received a read request from the CPU in the information processing apparatus of the embodiment 1. FIGs. 10A and 10B depicts operations of a case where the CPUs will have data without sharing, i.e., in Exclusive.

In step S221 of FIG. 10A, when the node controller NC managing the address of the reading target data has received a read request from the requester CPU, the node controller NC searches the own directory DR (step S222). In a case where the format of the block to which the own entry belongs obtained from the search is B-type (step S223 B-type), the process proceeds to step S224. In a case of A-type (step S223 A-type), the process proceeds to step S234 of FIG. 10B.

In step S224, in a case where the own entry already exists (not empty) in the block in the format of B-type (step S224 YES), the node controller NC proceeds to step S225. In a case where no own entry exists in the block (step S224 NO), the node controller NC proceeds to step S228.

In step S225, the node controller NC issues snoops to all the CPUs registered at the own entry, and deletes the CPU-IDs of all the registered CPUs from the own entry. Next, in step S226, the node controller NC receives the data from any one of the CPUs for which the CPU-IDs have been registered at the entry, and transfers the received data to the requester CPU. All the CPUs registered at the entry respond to the snoops from the node controller NC, and delete the data that the own cache memories store. At this time, the requester CPU stores the data in the own cache memory. Next, the node controller NC registers the CPU-ID of the requester CPU at the own entry, and makes the status bits SB of the own entry be Exclusive (step S227).

In step S228, the node controller NC proceeds to step S230 when the 8 entries have already been registered at the block (step S228 YES). The node controller NC proceeds to step S229 if this is not the case (step S228 NO). In step S229, the node controller NC transfers the data from the memory M to the requester CPU. At this time, the requester CPU stores the transferred data in the own cache memory. Next, in step S227, the node controller NC adds the own entry with the status bits SB as Exclusive, and registers the CPU-ID of the requester CPU at the added own entry.

In step S230, the node controller NC converts the format of the block from B-type into the format of A-type. Here, first, as for the own entry to be added, the node controller NC transfers the data from the memory M to the requester CPU (step S231). Then, the node controller NC adds the own entry in the format of Ax-1 type with the status bits SB as Exclusive, and registers at the own entry the CPU-ID and the board ID of the requester CPU (step S236).

On the other hand, as for the entries for which the number of the registered CPUs is two or less from among the 8 entries already registered at the block, the respective board IDs and CPU-IDs are registered in the format of Ax-1 type (step S232). Further, at this time, as for the entries for which the status bits SB are empty in the format of B-type, the entries are registered in the format of Ax-1 type with the status bits SB as Invalid. Further, also as for the other entries that are included in the block and are not included in the 8 entries, the entries are registered in the format of Ax-1 type with the status bits SB as Invalid.

On the other hand, as for the entries for which the three or more CPUs are registered from among the already registered 8 entries, the respective board IDs are registered in the format of Ax-2 type (step S233).

In step S234 of FIG. 10B, in a case where the status bits SB of the own entry indicate Invalid (step S234 YES), the node controller NC proceeds to step S235. If this is not the case (step S234 NO), the node controller NC proceeds to step S237. The fact that the status bits SB are Invalid (00) means that the entry is of Ax-1 type.

The node controller NC transfers the data from the data storage area of the memory M corresponding to the own entry to the requester CPU, in step S235. At this time, the requester CPU C stores the transferred data in the own cache memory CA. Next, with the status bits SB of the own entry as Exclusive, the node controller NC registers at the own entry the CPU-ID of the requester CPU and the board ID of the board B having the requester CPU (step S236).

In step S237, it is determined whether the status bits SB of the own entry are Exclusive. In a case of Exclusive (step S237 YES), the process proceeds to step S238. If this is not the case (step S237 NO), the process proceeds to step S240.

In step S238, the node controller NC issues a snoop to the CPU registered at the own entry, and notifies the CPU to which the snoop has been issued of changing the data storing mode of the entry from Exclusive into Invalid. Then, the node controller NC instructs the CPU to delete the data from the own cache memory CA after transferring it. Next, in step S239, the node controller NC transfers the data from the CPU that is the destination of the snoop to the requester CPU. The CPU that is the destination of the snoop responds to the instruction from the node controller and deletes the data from the own cache memory CA. The requester CPU stores the transferred data in the own cache memory. Next, in step S236, with the status bits SB of the own entry as Exclusive, the node controller NC registers at the own entry the CPU-ID of the requester CPU and the board ID of the board B having the requester CPU.

In step S240, it is determined whether the status bits SB of the own entry are Shared. The fact that the status bits SB are Shared (01) means that the own entry is of Ax-1 type. In a case of Shared (step S240 YES), the process proceeds to step S241. If this is not the case (step S240 NO), the process proceeds to step S243.

In step S241, the node controller NC issues snoops to all the CPUs registered at the own entry. That is, the node controller NC notifies all the CPUs of changing the data storing mode of the entry from Shared into Invalid, and instructs them to delete the reading target data from the own cache memories CA. Next, in step S242, the node controller NC transfers the data from any CPU storing the reading target data from among the CPUs that are the destinations of the snoops to the requester CPU. All the CPUs that are the destinations of the snoops respond to the instruction from the node controller NC, and delete the data from the own cache memories CA. Further, the requester CPU stores the transferred data in the own cache memory. Next, in step S236, with the status bits SB of the own entry as Exclusive, the node controller NC registers at the own entry the CPU-ID of the requester CPU and the board ID of the board B having the requester CPU.

In step S243, the node controller NC issues snoops to all the CPUs registered at the own entry. That is, the node controller NC notifies all the registered CPUs of changing the data storing mode of the entry from Shared into Invalid, and instructs them to delete the data from the own cache memories CA. Next, in step S244, the node controller NC transfers the data from any one of the CPUs storing the reading target data from among the CPUs that are the destinations of the snoops to the requester CPU. All the CPUs that are the destinations of the snoops respond to the above-mentioned instruction, and delete the data from the own cache memories CA. Further, the requester CPU stores the transferred data in the own cache memory. Next, the node controller NC changes the own entry into Ax-1 type in step S236. Then, with the status bits SB of the own entry as Exclusive, the node controller NC registers at the own entry the CPU-ID of the requester CPU and the board ID of the board B having the requester CPU. It is noted that in a case where the status bits SB of the own entry are not Shared in step S240 (S240 NO), they are neither Invalid nor Exclusive since S234 NO and S237 NO have been passed through. Thus, in this case, the status bits SB are 11, and the own entry is of Ax-2 type.

FIG. 11A is a diagram illustrating one example of a procedure of converting the format of the directory from A-type into B-type applicable to the information processing apparatus of the embodiment 1. This procedure is carried out by the format conversion part FC described later with FIG. 12.

The format conversion part FC has a counter CNT1, entry selection instruction circuits (1st, 2nd, 3rd, ... and 8th) SLL1, SLL2, S113, ... and SLL8, and entry selection circuits SL1, SL2, SL3, ... and SL8. The format conversion part FC further has bitmap conversion circuits BMC1, BMC2, BMC3, ... and BMC8, and encoders ENC1, ENC2, ENC3, ... and ENC8.

The counter CNT1 counts the number of the entries having the status bits other than Invalid, from among the entries of the block having the format of A-type FTA. Then, in a case where the number of the entries having the status bits SB other than Invalid exceeds 8, the counter CNT1 does not allow format conversion of the block into B-type. On the other hand, the counter CNT1 allows format conversion of the block into B-type when the number of the entries having the status bits SB other than Invalid is 8 or less.

In the case where the counter CNT1 has allowed format conversion of the block into B-type, each one of the entry selection instruction circuits SLL1, SLL2, SLL3, ... and SLL8 carries out the following operations. That is, the entry selection instruction circuit SLL1 selects one entry at a time in ascending order of the number from among the entries having the status bits SB other than Invalid included in the block. The entry selection instruction circuit SLL2 selects the entry having the number subsequent in ascending order to the entry selected by the entry selection instruction circuit SLL1 from among the entries having the status bits SB other than Invalid included in the block. The entry selection instruction circuit SLL3 selects the entry having the number subsequent in ascending order to the entry selected by the entry selection instruction circuit SLL2 from among the entries having the status bits SB other than Invalid included in the block. Thus, the entries having the status bits SB other than Invalid included in the block are selected in sequence by the entry selection instruction circuits SLL1, SLL2, SLL3, ... and SLL8, respectively.

The entry selection circuits SL1, SL2, SL3, ... and SL8 correspond to any ones of the entry selection instruction circuits SLL1, SLL2, SLL3, ... and SLL8, and any ones of the bitmap conversion circuits BMC1, BMC2, BMC3, ... and BMC8. The elements having the same numbers at the ends of the reference signs correspond to each other. The entry selection circuits SL1, SL2, SL3, ... and SL8 output the registration contents of the entries selected by the corresponding entry selection instruction circuits SLL1, SLL2, SLL3, ... SLL8 to the corresponding bitmap conversion circuits BMC1, BMC2, BMC3, ... and BMC8, respectively. Based on the registration contents of the entries that have been output by the corresponding entry selection circuits, the bitmap conversion circuits BMC1, BMC2, BMC3, ... and BMC8 convert them into the CPU-bitmaps of the respective boards B to be registered at the entries of the format of B-type.

To the encoders ENC1, ENC2, ENC3, ... and ENC8, information indicating which entries of the format of A-type have been selected is input from the corresponding entry selection instruction circuits SLL1, SLL2, SLL3, ... and SLL8, respectively. Each one of the encoders ENC1, ENC2, ENC3, ... and ENC8 encodes the information that has been input, and obtains the address bits AB to be registered at the entry of the format of B-type.

In FIG. 11A, the information each entry of the format of A-type has includes the status bits SB and the node IDs NID1, NID2 or the board bitmap BBM depicted in FIG. 4B. In FIG. 11A, "V" in the format of A-type FTA denotes the status bits SB; and "DATA" denotes the node IDs NID1 and NID2 or the board bitmap BBM.

In FIG. 11A, the information the format of B-type FTB has includes the status bits SB, the address bits AB and the CPU-bitmaps BIDn-1, ..., BID1 and BID0 depicted in FIG. 5. In FIG. 11A, "V" in the format of B-type FTB denotes the status bits SB; "INDEX" denotes the address bits AB; and "BITMAP" denotes the CPU-bitmaps. It is noted that the address bits AB (INDEX) are information (an address, an index or the like) indicating which entry of the block of the format of A-type the entry of the format FTB to which the address bits AB (INDEX) belong corresponds to.

FIG. 11B is a diagram illustrating one example of a procedure of converting the format of the directory from B-type into A-type applicable to the information processing apparatus of the embodiment 1. Also this procedure is carried out, together with the procedure described above with FIG. 11A, by the format conversion part FC described later with FIG. 12.

In addition to the configuration described with FIG. 11A, the format conversion part FC has an AND circuit AND1, a decoder DC1 and a writing data generation circuit WDG1.

A counter CNT2 counts, for each block, the number of the entries having the status bits SB other than empty, registered in the format of B-type FTB. The AND circuit AND1 allows format conversion of the block into the format of A-type FTA in a case where the block having the format of B-type FTB meets the following conditions. This is the case where a request ERR1 for newly and additionally registering an entry has been made at the block, and also, the number of the already registered entries counted by the counter CNT2 is 8. It is noted that the request ERR1 for newly and additionally adding an entry is generated in a case where the own entry has not been registered when a read request has been received, such as a case where the determination result of step S124 becomes NO in FIG. 7A.

In a case where converting the block into A-type has been allowed by the AND circuit AND1, the decoder DC1 decodes the address bits AB of the block having the format FTB of B-type. The address bits AB are depicted as INDEX in FIG. 11B. Thus, it is determined which entry of the format of A-type FTA each entry of the format of B-type FTB corresponds to.

Based on the contents of the CPU-bitmaps of each entry that has been already registered at the block of the format of B-type FTB, the writing data generation circuit WDG1 determines the format of the corresponding entry of the format of A-type FTA. That is, it is determined whether to change the format of the original entry into the format of Ax-1 type or the format of Ax-2 type. More specifically, in a case where the number of the registered CPUs that store data in the entry is two or less, the format of Ax-1 type is selected. In a case where the three or more CPUs that store data have been registered, the format of Ax-2 type is selected.

Further, the writing data generation circuit WDG1 registers information indicating the CPU-ID(s) of the CPU(s) that stores(store) data and the board ID(s) of the board(s) B having the CPU(s) at the entry in a case of the format of Ax-1 type. On the other hand, in a case of the format of Ax-2 type, information indicating the board IDs of the respective boards B having the respective CPUs that store data is registered at the entry. Here, the entry of the format of A-type FTA which will be registered is determined by the decoder DC1.

FIG. 12 is a functional block diagram of the node controller NC applicable to the information processing apparatus of the embodiment 1. The node controller NC has a router RT1 connected with the respective CPUs C included in the board B to which the node controller NC belongs and a router RT2 connected with the node controllers NC of the other boards. The node controller NC further has the format conversion part FC having the configuration described above with FIGs. 11A and 11B; and a directory search function part DS.

The router RT1 communicates instructions and data with the CPUs C included in the board B to which the node controller NC belongs. The router RT2 communicates instructions and data with the node controllers NC of the other boards. The directory search function part DS responds to a read request transferred from the CPU C included in the board B to which the node controller NC belongs via the router RT1, and searches the directory DR for the CPU C that stores the reading target data. The directory DR has the configuration described above with FIGs. 4B, FIG. 5 and so forth.

An operation example of the node controller NC having such a configuration will be described now. For example, the router RT1 receives a read request from the requester CPU C included in the board B having the node controller NC, and the directory DR is searched by using the directory search function part DS in a case where the node controller NC itself manages the reading target data. Thus, the node controller recognizes the CPU C that stores the data. In a case where the CPU C that stores the data is the CPU C included in the board B to which the node controller itself belongs, the router RT1 transfers the read request to the CPU C that stores the data. The CPU C that stores the data reads the reading target data from the own cache memory CA, and transfers it to the requester CPU C.

On the other hand, in a case where the CPU C that stores the data belongs to the other board B, the router RT1 transfers the read request to the CPU that stores the data via the router RT2, and the routers RT2 and RT1 of the other board B. The CPU C of the other board B having received the read request reads the data that is the target of the read request from the own cache memory CA, and transfers the read data to the requester CPU C via the routers RT1 and RT2 of the other board B and the routers RT2 and RT1 of the board B to which the requester CPU C belongs.

### Description of Reference Signs

B, B-1, B-2, ..., B-n-1 board (information processing part)
C, C01, C02, C03, ..., C11, C12, C13, ..., Cn-11, Cn-12, Cn-13, Cn-14 CPU
CA, CA01, CA02, CA03, ..., CA11, CA12, CA13, ..., CAn-11, CAn-12, CAn-13, CAn-14 cache memory
M, M01, M02, M03, ..., M11, M12, M13, ..., Mn-11, Mn-12, Mn-13, Mn-14 memory
NC, NC-0, NC-1, ..., NC-n-1 node controller
DR, DR-0, DR-1, ..., DR-n-1 directory
FC format conversion part

## Claims

1. An information processing apparatus comprising:
a first information processing part which includes
plural first CPUs,
plural first memories, each of which has plural first data storage areas,
a first directory, information being registered with the first directory in a first format having plural entries corresponding to any ones of the plural first data storage areas, respectively, the information registered with the first directory being at least any one of information indicating a CPU that stores data which is stored in the plural first data storage areas and information indicating an information processing part that has the CPU, and a first format conversion part that converts into a second format, the second format is such that an entry that is registered in such a way that data is not to be used from among the plural entries is removed and the number of the entries is reduced; and
a second information processing part which includes
plural second CPUs,
plural second memories, each of which has plural second data storage areas,
a second directory, information being registered with the second directory in a third format having plural entries corresponding to any ones of the plural second data storage areas, respectively, the information registered with the second directory being at least any one of information indicating a CPU that stores data which is stored in the plural second data storage areas and information indicating an information processing part that has the CPU, and a second format conversion part that converts into a fourth format, the fourth format being such that an entry registered in such a way that data is not to be used from among the plural entries is removed and the number of the entries is reduced.

2. The information processing apparatus according to claim 1, wherein
upon new registration of the CPU that stores data with the first directory, the first format conversion part converts the format of a block into the first format in a case where the format of the block to which the entry of the entries of the first directory corresponding to the first storage area that stores the data belongs is the second format, the entry corresponding to the data storage area is not registered in the second format and the number of the valid entries of the second format has already reached a prescribed value of the second format.

3. The information processing apparatus according to claim 2, wherein
the first format conversion part has a 1-2 conversion part having
an entry selection part that selects the entry to be registered in the second format from among the respective entries registered in the first format,
a registration content generation part that generates contents to be registered at the entry of the second format based on registration contents of the selected entry, and
an identification information generation part that generates identification information to be registered at the entry of the second format based on information for identifying the entry of the first format selected by the entry selection part, and converting the first format into the second format, and
a 2-1 conversion part having
an entry determination part that determines the entry of the first format based on the identification information registered at each entry of the second format, and
a registration content generation part that generates contents to be registered in the first format based on registration contents of each entry of the second format, and converting the second format into the first format.

4. A control method of an information processing apparatus that includes a first information processing part having plural first CPUs, and plural first memories, each of which has plural first data storage areas, and a second information processing part having plural second CPUs, and plural second memories, each of which has plural second data storage areas, the control method of the information processing apparatus comprising:
a step of registering with a directory of the first information processing part at least any one of information indicating a CPU that stores data which is stored in the plural first data storage areas and information indicating an information processing part that has the CPU in a first format having plural entries corresponding to any ones of the plural first data storage areas, respectively; and
a step of converting, by a format conversion part of the first information processing part, into a second format in which an entry registered in such a way that data is not to be used from among the plural entries is removed and the number of the entries is reduced.

5. The control method of the information processing apparatus according to claim 4, wherein
upon new registration of information indicating the CPU that stores data with the directory of the first information processing part, the format conversion part of the first information processing part converts the format of a block into the first format in a case where the format of the block to which the entry corresponding to the first storage area that stores the data belongs is the second format, the entry corresponding to the data storage area is not registered in the second format and the number of the valid entries of the second format has reached a prescribed value of the second format.

6. The control method of the information processing apparatus according to claim 5, wherein
the step of converting the first format into the second format by the format conversion part of the first information processing part includes
an entry selection step of selecting the entry to be registered in the second format from among the respective entries registered in the first format,
a registration content generation step of generating contents to be registered in the second format based on registration contents of the selected entry, and
an identification information generation step of generating identification information to be registered in the second format based on information for identifying the entry of the first format selected by the entry selection part, and
the step of converting the second format into the first format by the format conversion part of the first information processing part includes
an entry determination step of determining the entry of the first format based on the identification information registered at each entry of the second format, and
a registration content generation step of generating contents to be registered in the first format based on registration contents of each entry of the second format.
